Europäisches Patentamt

European Patent Office

Office européen des brevets

(19)

(11) Veröffentlichungsnummer : **0 040 857**
**B1**

# (12) EUROPÄISCHE PATENTSCHRIFT

(45) Veröffentlichungstag der Patentschrift :
15.08.84

(21) Anmeldenummer : 81104085.6

(22) Anmeldetag : 27.05.81

(51) Int. Cl.³ : **C 10 B 53/00**, **F 23 J 1/00**,
**F 23 J 15/00**

(54) **Verfahren und Vorrichtung zur Abscheidung von gasförmigen und festen Schadstoffen aus Rückständen, die bei thermischen Prozessen, insbesondere der Pyrolyse von Abfallstoffen, anfallen.**

(30) Priorität : 28.05.80 DE 3020248

(43) Veröffentlichungstag der Anmeldung :
02.12.81 Patentblatt 81/48

(45) Bekanntmachung des Hinweises auf die Patenterteilung : 15.08.84 Patentblatt 84/33

(84) Benannte Vertragsstaaten :
AT BE CH FR GB IT LI NL SE

(56) Entgegenhaltungen :
EP-A- 0 008 770
DE-A- 2 802 018
DE-A- 2 944 989
US-A- 2 600 871

(73) Patentinhaber : Deutsche Kommunal-Anlagen Miete
GmbH
Arnulfstrasse 44
D-8000 München 2 (DE)

(72) Erfinder : Hillekamp, Klaus, Dr.
Musäusstrasse 3
D-8000 München 60 (DE)

(74) Vertreter : Hartmann, Günter, Dr. Dipl.-Chem.
St.-Anna-Strasse 15
D-8000 München 22 (DE)

Jouve, 18, rue St-Denis, 75001 Paris, France

**Beschreibung**

Die Erfindung betrifft ein Verfahren und eine Vorrichtung zur Abscheidung von gasförmigen und festen Schadstoffen aus Rückständen, die bei thermischen Prozessen, insbesondere der Pyrolyse von Abfallstoffen, in Form von Rohgas und Feststoffrückstand anfallen.

Bekanntlich besteht der Vorteil der trockenen Heißreinigung von schadstoffhaltigen Gasen darin, daß die Waschwasserbehandlung entfallen kann. Es ist auch nicht notwendig, die Gase nachträglich aufzuwärmen. Ferner sind die zur Bindung der Schadstoffe verwendeten Additive (Chemikalien) als ausgebrauchte Stäube ablagerungsfähig. Es ist jedoch notwendig, eine ausreichend große Reaktionsfähigkeit zwischen den Additiven und den zu bindenden Schadstoffen in einem Reaktionsraum zu schaffen (Maschinenmarkt, Würzburg, 85, (1979), Seiten 620 bis 623). Hierzu ist es beispielsweise bekannt, umlaufende Trommeln zu verwenden, die eine Füllung von Kugeln und Additiven aufweisen und durch die das zu reinigende Gas geleitet wird. In der Trommel werden bei den Additiven ständig neue Oberflächen geschaffen, so daß die Reaktion mit den Schadstoffen unterstützt wird. Da diese bekannte Trockenreinigung eine hohe Staubdichte von Additiven im Gasstrom voraussetzt, muß eine wirksame Entstaubung nachgeschaltet werden (Umwelt 5, 79, Seite 382). Dabei kann die endgültige Reinigung und Entstaubung mittels Gewebefiltern erfolgen. Derartige Gewebe sind jedoch nur bis etwa 200 °C im Dauerbetrieb einsatzfähig (Maschinenmarkt, Würzburg, 85 (1979), Seite 622). Bei einer derart niedrigen Temperatur besteht jedoch die Gefahr, daß eine Kondensation der im Gas als Schadstoffe vorhandenen Kohlenwasserstoffe erfolgt, wodurch die Gefahr der Verstopfung der Gewebefilter und auch eine Zerstörung derselben besteht.

Insbesondere in Pyrolyseanlagen, in denen Abfallstoffe, wie beispielsweise Sondermüll (Schreddermüll) oder Hausmüll, entgast bzw. vergast werden, wird das Pyrolysegas getrennt vom übrigen Feststoffrückstand an der Austragsseite des Pyrolyseofens nach oben abgezogen, während der Feststoffrückstand freifallend nach unten in eine Austragseinrichtung, die beispielsweise als Naßentschlacker ausgebildet ist, eingebracht wird. Im Feststoffanteil des Rückstandes sind auch Feinanteile enthalten, die Salze und Schwermetalle enthalten. Die Feststoffteile des Rückstandes, die in der Regel noch einen erheblichen Anteil an Kohlenstoff enthalten, können daher nicht ohne weiteres verbrannt oder deponiert werden, da die Gefahr einer zusätzlichen Belastung der Umwelt besteht. Bisher sind die Salze und Schwermetalle im Rückstand verblieben und werden bei einer Energienutzung durch Verbrennung des Rückstandes als gasförmige Schadstoffe emittiert bzw. gelangen bei einer Deponierung durch Auswaschung des Sickerwassers in das Grundwasser.

Aufgabe der Erfindung ist es daher, ein Verfahren und eine Vorrichtung der eingangs genannten Art zu schaffen, mit denen es möglich ist, aus dem Rückstand des thermischen Prozesses, insbesondere dem Pyrolyserückstand, die schadstoffbelasteten Anteile getrennt vom übrigen festen Rückstand auszutragen und zu deponieren und gleichzeitig eine Möglichkeit zu schaffen, das Rohgas, insbesondere Pyrolyserohgas, von gasförmigen Schadstoffen zu befreien.

Diese Aufgabe wird verfahrensgemäß dadurch gelöst, daß die feinen Feststoffanteile im Feststoffrückstand zusammen mit dem Rohgas in einem Sichtungsraum aus dem Feststoffrückstand, der als freifallendes Sichtgut aus dem thermischen Prozeß ausgetragen wird, in einen Reaktionsraum abgeleitet werden, in dem durch Zugabe von Additiven die Feststoffanteile und/oder gasförmigen Schadstoffe abgebunden und ausgetragen werden.

Vorrichtungsgemäß wird diese Aufgabe dadurch gelöst, daß
— die Eintrittsöffnung des Reaktionsraumes, durch welche das Rohgas und der Feinanteil des Rückstandes eingeleitet werden, mit dem Austragsraum der thermischen Prozeßanlage, insbesondere des Pyrolysereaktors, der eine Umlenkvorrichtung für das Rohgas aufweist, verbunden ist,
— im Reaktionsraum, in den eine Zugabeeinrichtung für Additive mündet, eine sich in seiner Längsausdehnung erstreckende Misch- und Transporteinrichtung angeordnet ist und
— von der Eintrittsseite zur Austragsseite des Reaktionsraumes hin ein Druckgefälle herrscht.

Aus EP-A-0 008 770 ist zwar bereits die Abscheidung von gasförmigen Schadstoffen aus Rauchgasen, insbesondere von Müllverbrennungsanlagen, durch Zugabe von Additiven, durch die die Schadstoffe abgebunden und ausgetragen werden, bekannt, die daraus zu entnehmenden Lehren sind jedoch auf die Abscheidung von Schadstoffen aus den Produkten der Pyrolyse von Abfallstoffen nicht ohne weiteres übertragbar, da die zum Pyrolysegas zugegebenen Additive durch den Kohlenstoffstaub und die Kondensate der Pyrolysegase in ihrer Reaktionswirkung passiviert werden.

Ein Gegenstand der Erfindung ist ein Verfahren zur Abscheidung von gasförmigen und festen Schadstoffen aus Rückständen, die bei thermischen Prozessen, insbesondere der Pyrolyse von Abfallstoffen, in Form von Rohgas und Feststoffrückstand anfallen, das dadurch gekennzeichnet ist, daß die feinen Feststoffanteile im Feststoffrückstand zusammen mit dem Rohgas in einem Sichtungsraum aus dem Feststoffrückstand, der als freifallendes Sichtgut aus dem thermischen Prozeß ausgetragen wird, in einen Reaktionsraum abgeleitet werden, in dem durch Zugabe von Additiven die Feststoffanteile und/oder gasförmigen Schadstoffe abgebunden und ausgetragen werden.

Gemäß einer bevorzugten Ausgestaltung der Erfindung wird zum Sichten der feinen Feststoffanteile aus dem Feststoffrückstand das Pyrolysegas verwendet.

Gemäß einer weiteren bevorzugten Ausgestaltung der Erfindung wird das Pyrolysegas getrennt vom Feststoffrückstand aus dem Reaktor abgezogen und dann zur Quer- oder Gegenstromrichtung der feinen Feststoffanteile aus dem Sichtgut quer oder entgegengesetzt zum freifallenden Sichtgut geführt.

Gemäß einer weiteren bevorzugten Ausgestaltung der Erfindung wird das Reingas am Austrag des Reaktionsraumes in einen Beruhigungsraum geleitet.

Gemäß einer weiteren bevorzugten Ausgestaltung der Erfindung wird die Temperatur im Reaktionsraum über dem Kondensationsstaupunkt von im Rohgas enthaltenen Kohlenwasserstoffen gehalten.

Gemäß einer weiteren bevorzugten Ausgestaltung der Erfindung wird das Reingas einem oder mehreren Brennern der thermischen Prozeßanlage zur Verbrennung zugeleitet.

Gemäß einer weiteren bevorzugten Ausgestaltung der Erfindung werden aus dem Gas nach der Trockenreinigung und der Abtrennung der gasförmigen Schadstoffe durch Kondensation Kohlenwasserstoffe, insbesondere Aromaten, entfernt.

Gemäß einer weiteren bevorzugten Ausgestaltung der Erfindung wird der Rohgasstrom zunächst in gleicher Richtung wie der übrige Rückstand geführt und dann in den Reaktionsraum umgeleitet.

Gegenstand der Erfindung ist ferner eine Vorrichtung zur Durchführung des vorstehend beschriebenen Verfahrens, die dadurch gekennzeichnet ist, daß der Reaktionsraum mit seiner Eintrittsöffnung mit dem Austragsraum der thermischen Prozeßanlage verbunden ist, der eine Umlenkeinrichtung für das Rohgas aufweist, im Reaktionsraum, in den eine Zugabeeinrichtung für Additive mündet, eine Misch- und Transporteinrichtung angeordnet ist und von der Eintrittsseite zur Austragsseite des Reaktionsraumes hin ein Druckgefälle herrscht.

Gemäß einer bevorzugten Ausgestaltung dieser Vorrichtung ist die Zugabeeinrichtung für die Additive in der Nähe der Eintrittsöffnung des Reaktionsraumes vorgesehen und die Misch- und Transporteinrichtung erstreckt sich von der Zugabestelle bis zum Austragsende des Reaktionsraumes.

Gemäß einer weiteren bevorzugten Ausgestaltung dieser Vorrichtung ist die Misch- und Transporteinrichtung als Schnecke oder als umlaufende Mischtrommel mit konischer Innenwand oder geneigter Achse ausgebildet.

Gemäß einer weiteren bevorzugten Ausgestaltung dieser Vorrichtung ist der untere Teil des Austragsraumes der thermischen Prozeßanlage, durch den der thermische Prozeßrückstand freifallend geleitet wird, nach Art eines Windsichters ausgebildet, dessen Austrittsöffnung in den Reaktionsraum einmündet und bei dem der Rohgasstrom in den Reaktionsraum geleitet wird.

Gemäß einer weiteren bevorzugten Ausgestaltung dieser Vorrichtung ist an der Austragsseite des Reaktionsraumes ein Beruhigungsraum und/oder ein Staubabscheider angeordnet, in den der Reaktionsraum tangential einmündet.

Gemäß einer weiteren bevorzugten Ausgestaltung dieser Vorrichtung ist im Bereich des Sichtungsraumes im Austragsraum der thermischen Prozeßanlage eine verstellbare Umlenkeinrichtung angeordnet.

Gemäß einer weiteren bevorzugten Ausgestaltung dieser Vorrichtung wird das im Reaktionsraum von der Eintrittsseite zur Austragsseite hin herrschende Druckgefälle durch den bei der Gasentstehung in der thermischen Prozeßanlage, insbesondere im Pyrolysereaktor, aufgebauten Druck aufrechterhalten.

Gemäß einer weiteren bevorzugten Ausgestaltung dieser Vorrichtung wird für die Aufrechterhaltung des im Reaktionsraum von der Eintrittsseite zur Austragsseite hin herrschenden Druckgefälles der aufgrund der Injektorwirkung der Verbrennungsluft des bzw. der Brenner der thermischen Prozeßanlage geschaffene Unterdruck verwendet.

Gemäß einer weiteren bevorzugten Ausgestaltung dieser Vorrichtung ist zur Aufrechterhaltung des im Reaktionsraum notwendigen Druckgefälles ein Saugzugebläse auf der Abgasseite des Pyrolysereaktors angeordnet.

Gemäß einer weiteren bevorzugten Ausgestaltung dieser Vorrichtung ist die gesamte Leitungsführung vom Austragsraum bis zum Brenner bzw. zu den Brennern thermisch isoliert und/oder beheizt.

Gemäß einer weiteren bevorzugten Ausgestaltung dieser Vorrichtung wird zur Vermeidung der Kondensation von Kohlenwasserstoffen eine entsprechende Temperatur in der gesamten Gasleitungsführung vom Austragsraum bis zum Brenner bzw. zu den Brennern durch Beheizung aufrechterhalten.

Gemäß einer weiteren bevorzugten Ausgestaltung dieser Vorrichtung ist der Reaktionsraum kanalförmig ausgebildet.

Da, wie sich herausgestellt hat, vor allem im Feinanteil des bei der Pyrolyse von Abfallstoffen anfallenden Rückstandes Salze und Schwermetalle als Schadstoffe enthalten sind, ist es möglich, aus dem Rückstand die schadstoffbelasteten Anteile zu trennen. Die Feinanteile gelangen als Staubfracht des Rohgases, die in der Regel auch feinen Kohlenstoff, Inertmaterial wie Sand und Asche neben den feinkörnigen Salzen und Schwermetallen enthalten kann, in den vorzugsweise kanalförmig oder rohrförmig ausgebildeten Reaktionsraum, in welchem die Abbindung des mitgeführten Feinanteiles durch Additive, insbesondere Absorptionsmittel, erfolgt. Geeignete Additive sind Kalkverbindungen, wie beispielsweise Calciumhydroxid, wobei aber auch andere Bindemittel, wie beispielsweise in der DE-A-29 44 989 beschrieben, zur Anwendung kommen können. Für saure Schadstoffe eignet sich beispielsweise neben dem erwähnten Calciumhydroxid auch Hämatit und für basische Schadstoffe können saure Erde, vorzugsweise Montmorillonit und Bentonit, verwendet werden. Ferner lassen sich gasförmige Schadstoffe, z. B. anorganische Stoffe wie HCl, $H_2S$ und dgl., sowie organische Stoffe wie Chlorverbindungen dabei abbinden und austragen.

Zum Vermischen der Additive mit dem Feinanteil und zur gleichzeitigen Verhinderung einer Verstopfung des Reaktionsraumes kann die in diesem vorgesehene Transport- und Mischeinrichtung als Schnecke ausgebildet sein. Innerhalb des Reaktionsraumes findet eine Verdichtung bzw. Agglomerierung des Feinstoffanteils statt, der vermutlich auf einen elektrischen Ladungsausgleich zwischen dem Feinstoffanteil bzw. Feinstaub und den Additiven zurückgeführt werden kann. Man gewinnt damit auf einfache Weise eine Abscheidung des Staubes aus der Gasphase. Bei der Agglomeration können sowohl die Mechanismen der Absorption als auch der Adsorption ablaufen.

Um das Gas an der Austragsseite möglichst staubfrei abführen zu können, befindet sich an der Austragsseite des Reaktionsraumes ein Staubabscheider, der vorzugsweise als Fliehkraftabscheider (Zyklon) ausgebildet ist. Der Reaktionsraum mündet dabei tangential in den Staubabscheider, der auch in Verbindung mit dem Beruhigungsraum vorgesehen sein kann. Wenn der Staub im Reaktionsraum durch Agglomeration größere Partikel gebildet hat, können die Feststoffteilchen in dem Beruhigungsraum aufgrund der Unterschiede in der Sinkgeschwindigkeit und in der Strömungsgeschwindigkeit voneinander getrennt werden. Soweit ein größerer Anteil feiner Partikel aus dem Gasstrom abgeschieden werden muß, kann dies mit dem Staubabscheider (Zyklon) erfolgen. Um den Zyklon zu entlasten, kann es sinnvoll sein, ihm den Beruhigungsraum vorzuschalten, um auf diese Weise die gröberen Teilchen bereits über den Beruhigungsraum auszutragen, während der Zyklon die feineren Teilchen abscheidet. Beruhigungsraum und Staubabscheider können in Reihe oder parallel geschaltet sein.

Das Verfahren und die Vorrichtung der Erfindung können insbesondere in Verbindung mit einem Pyrolysereaktor, insbesondere Drehrohrofen, in welchem Abfälle pyrolysiert werden, zur Anwendung kommen. Dabei ergibt sich als Vorteil, daß die Schadstoffabtrennung aus dem bei der Pyrolyse der Abfallstoffe entstehenden Pyrolysegas von den Pyrolysebedingungen im Pyrolyseofen abgekoppelt sind. Es ist daher möglich, die Schadstoffabtrennung bei der hierzu günstigsten Reaktionstemperatur durchzuführen.

Die unterste Reaktionstemperaturgrenze wird dabei im wesentlichen bestimmt durch den Kondensationsstaupunkt der im Rohgas enthaltenen Kohlenwasserstoffe. Die unterste Reaktionstemperatur im Reaktionsraum liegt daher bei 200° bis 250 °C. Zur Vermeidung der Kondensation der Kohlenwasserstoffe kann die Temperatur im Austragsraum, Reaktionsraum, Beruhigungsraum, Staubabscheider sowie in der zu dem Brenner bzw. zu den Brennern geführten Gasleitung durch Beheizung, beispielsweise elektrisch, durch Wärmeträgeröl oder heißes Abgas, aufrechterhalten werden.

Das Verfahren und die Vorrichtung nach der Erfindung können sowohl im Zusammenhand mit einer Niedertemperaturpyrolyseeinrichtung, die beispielsweise in einem Temperaturbereich von 250 °C bis 450 °C arbeitet, als auch bei einer Mitteltemperaturpyrolyseeinrichtung, bei der Temperaturen bis 800 °C auftreten, Anwendung finden. Die Temperaturwahl bei der Pyrolyse wird immer davon abhängen, mit welcher Zielsetzung die Pyrolyse durchgeführt wird.

Enthält das Pyrolysegas wertvolle Kondensatbestandteile, z. B. Aromaten, die als Rohstoff wertvoll sind und beispielsweise bei der Pyrolyse von Sondermüll, die in einem Temperaturbereich von 650 °C bis 750 °C durchgeführt werden kann, anfallen, wird man das Pyrolysegas nicht unmittelbar verbrennen, sondern nach Abtrennung der anorganischen Schadstoffe die wertvollen Aromaten durch Kondensation aus dem Pyrolysegas zurückgewinnen, wie beispielsweise in der DE-A-29 44 989 beschrieben.

Es ist aber auch möglich, das im Reaktionsraum gewonnene Reingas unmittelbar zur Verbrennung zu verwenden und den Brennern der Pyrolyseeinrichtung zuzuführen. Dies ist insbesondere dann von Vorteil, wenn Abfälle mit einem relativ hohen Wassergehalt, beispielsweise Hausmüll, pyrolysiert werden. Das bei der Pyrolyse von Hausmüll entstandene Pyrolysegas besitzt gegenüber dem Gas aus der Sondermüllpyrolyse einen geringeren Anteil an aromatischen Kohlenwasserstoffen. Bei der Kondensation des Hausmüllpyrolysegases entsteht außerdem eine große Wassermenge, die gereinigt werden muß, was einen zusätzlichen Aufwand bedeutet. Deshalb ist es sinnvoller, das Hausmüllpyrolysegas nicht zu kondensieren, sondern nach der Schadstoffreinigung im Reaktionsraum unmittelbar den Brennern der Pyrolyseanlage zuzuführen.

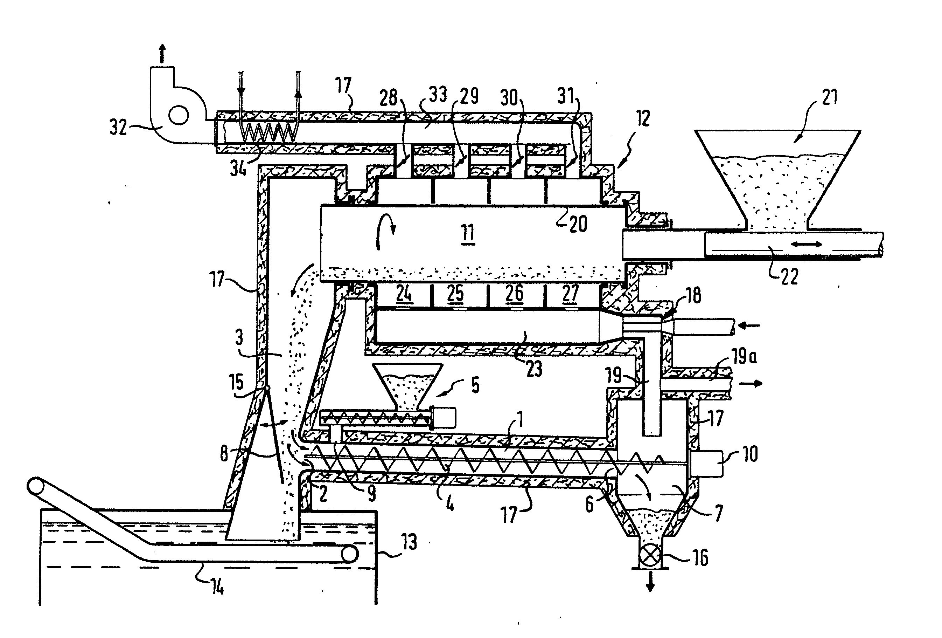

In der beiliegenden Zeichnung ist ein Ausführungsbeispiel der Erfindung dargestellt, das in Verbindung mit einer Pyrolyseanlage, insbesondere einem Drehrohrofen, wie er beispielsweise in der DE-A-30 18 572 beschrieben ist, arbeitet. Natürlich ist es möglich Verfahren und die Vorrichtung nicht nur bei einer Pyrolyseeinrichtung, die einen einzigen zentralen Brenner, wie in der vorgenannten DE-A-30 18 572 beschrieben, aufweist, sondern auch in einer solchen mit mehreren Brennern anzuwenden.

Die Vorrichtung zur trockenen, insbesondere zur Heißreinigung der Gase, besitzt beim dargestellten Ausführungsbeispiel einen kanalförmig ausgebildeten Reaktionsraum 1, der in einfacher Weise als Rohr ausgebildet sein kann. In diesem Reaktionsraum 1 befindet sich eine Schnecke 4, die als Transport- und Mischeinrichtung wirkt. Diese Schnecke 4 erstreckt sich von einer Eintrittsöffnung 2 bzw. von einer Zugabestelle 9, an der eine Zugabeeinrichtung 5 für die Additive, insbesondere Absorptionsmittel, vorgesehen ist, bei zu einem Austragsende 6, an welchem der Reaktionsraum 1 tangential in einen Stauhabscheider 7, der als Fliehkraftabscheider ausgebildet ist, einmündet. Die Schnecke 4 wird mit einem Motor 10, der beispielsweise am Gehäuse des Fliehkraftabscheiders 7 befestigt ist, angetrieben. Im Reaktionsraum 1 herrscht von der Eintrittsöffnung 2 zum Austragsende 6 hin ein Druckgefälle, durch welches das Pyrolysegas aus dem Pyrolyseraum 11 des Pyrolyseofens 12 in den Reaktionsraum 1 eingebracht wird. Mit dem in den Reaktionsraum 1 angesaugten Pyrolyse rohgas werden auch die Feinanteile des Rückstandes des Pyrolyseofens mitgerissen.

Wie aus der Zeichnung zu ersehen ist, bewegt sich der feste Rückstand des Pyrolyseofens 12 aus dem Pyrolyseraum 11 freifallend durch einen Austragsraum 3 und fällt in einen Naßentschlacker 13, in dem ein Transportmittel 14 zum Austragen des Rückstandes angeordnet ist. In der gleichen Richtung, in der sich der freifallende feste Rückstand im Austragsraum 3 bewegt, wird auch das Pyrolyserohgas zunächst durch den Austragsraum 3 bis in die Nähe der Eintrittsöffnung 2 der Reaktionskammer 1 geleitet. Das Pyrolyserohgas wird im Bereich der Eintrittsöffnung 2 in den Reaktionsraum 1 umgelenkt, wobei, wie schon erwähnt, die Feinbestandteile im nach unten fallenden Rückstand vom Pyrolyserohgas mitgerissen werden. Insofern tritt eine ähnliche Wirkung auf wie in Windsichtern, die in herkömmlicher Weise zur Trockenklassierung verwendet werden. Der Sichtungseffekt kann noch durch eine (nicht dargestellte) Querströmung unterstützt werden. Eine Unterstützung des Sichtungseffektes wird auch durch eine im Austragsraum 3 schwenkbar um eine Achse 15 angeordnete Umlenkeinrichtung 8 erzielt. Durch diese beispielsweise als Ablenkblech ausgebildete Umlenkeinrichtung 8 ist es möglich, den Hauptanteil des nach unten fallenden Rückstandes und des nach unten strömenden Rohgases in die Nähe bzw. Richtung der Eintrittsöffnung 2 der Reaktionskammer 1 zu leiten, wobei außerdem das Mitreißen des feinstoffanteils durch das Gas aufgrund der höheren gasgeschwindigkeit noch gefördert wird. Ein nicht dargestelltes Saugzuggebläse an der Austragsseite des Reaktionsraumes 1 kann die Umlenkung des Rohgasstromes noch unterstützen.

Die mit dem Pyrolyserohgas mitgerissenen Feinanteile agglomerieren bzw. verdichten sich aufgrund ihrer Reaktion mit den Additiven, die an der Zugabestelle 9 in der Nähe der Eintrittsöffnung 2 durch die Zugabeeinrichtung 5 in den Reaktionsraum 1 eingebracht werden. Durch die Schnecke 4 erfolgt eine innige Vermischung der Feinstoffanteile mit den Additiven und außerdem wird durch die Schnecke 4 eine Verstopfung im rohrförmigen Kanal des Reaktionsraumes 1 verhindert. Durch die Schnecke 4 werden die agglomerierten Staubteilchen bzw. Feinstoffteilchen zum Austragsende 6 des Reaktionsraumes transportiert und gelangen dort in tangentialer Richtung in den Fliehkraftabscheider 7 und werden nach unten durch eine Austragseinrichtung 16 ausgetragen. Das vom Staub befreite Gas wird über eine gasleitung 19, die mit dem Tauchrohr des Fliehkraftabscheiders verbunden ist, einem Brenner 18 des Pyrolyseofens 12 zugeführt. Über eine nicht näher dargestellte Verbundregeleinrichtung wird das für die Verbrennung notwendige Gas-Luft-Verhältnis geregelt. Überschüssiges Pyrolysegas kann durch eine Abzweigung 19a zur weiteren Verwertung weitergeleitet werden.

Der Pyrolyseofen 12 besitzt ein den Pyrolyseraum 11 umfassendes Drehrohr 20, in welchem die Pyrolyse stattfindet. Der zu entgasende bzw. vergasende Müll wird mittels einer Beschickungseinrichtung 21 von einem Beschickungsstöbel 22 in den Pyrolyseraum eingebracht. Die beheizung erfolgt mittels des einzigen Brenners 18, der parallel zur Drehrohrofenachse in eine Brennkammer 23 ausgerichtet ist. Die Brennereinrichtung kann auch eine mehrstufige, insbesondere zweistufige, Verbrennung durchführen, wenn zunächst nur ein bestimmter Anteil der Pyrolysegase, z. B. Ammoniak, verbrannt und der restliche Anteil des Pyrolysegases nachverbrannt werden soll. Die heißen Gase in der Brennkammer gelangen direkt in Heizkammern 24, 25, 26, 27, die an ihrer Auslaßseite Klappen 28, 29, 30 und 31 aufweisen, die mit einem Abgasgebläse 32 zusammenarbeiten, um in den einzelnen Heizkammern die gewünschte Wärmeabgabe an den Mantel des Drehrohrofens zu erzielen. Ein derartiger Pyrolyseofen ist in der DE-A-30 18 572 beschrieben. In einer von den Ausgangsseiten der Heizkammern 24 bis 27 zum Abgasgebläse 32 hin geführten Abgasleitung 33 kann noch ein Wärmetauscher 34 angeordnet sein.

Der Reaktionsraum 1 und die dargestellte Abtrennung der Feinstoffanteile aus dem übrigen Feststoffrückstand kann jedoch auch im Zusammenhang mit einer Pyrolyseeinrichtung zur Anwendung kommen, bei der anstelle eines einzigen Brenners, wie beim dargestellten Ausführungsbeispiel, entlang des Mantels des Drehrohrofens mehrere Brenner angeordnet sind, wobei auch diese Brenner mit dem gereinigten Pyrolysegas direkt versorgt werden können.

Insbesondere dann, wenn die Rückstände aufgrund ihres hohen Energieinhaltes noch verbrannt werden sollen, wird man anstelle des Naßaustrages einen Trockenaustrag für die festen Rückstände vorsehen. Zur Vermeidung der Kondensation der Kohlenwasserstoffe wird man eine entsprechende Temperatur im Austragsraum 3, im Reaktionsraum 1, im Beruhigungsraum, im Staubabscheider 7 und der zum Brenner 18 geführten Gasleitung 19 aufrechterhalten. Dies kann beispielsweise durch elektrische Beheizung oder durch Beheizung mit Hilfe eines Wärmeträgeröles oder heißen Abgases erfolgen. Eine entsprechende Wärmeisolierung 17 ist vorgesehen.

Das Druckgefälle im Reaktionsraum 1 kann in vorteilhafter Weise dadurch erzeugt oder untersützt werden, daß der Brenner 18 bzw. die Brenner der Pyrolyseeinrichtung so ausgebildet sind, daß die als Preßluft zugeführte Verbrennungsluft eine Injektorwirkung auf das Pyrolysegas ausübt. Der dabei erzeugte Unterdruck, der auch im Reaktionsraum 1 zur Auswirkung kommt, kann das notwendige Druckgefälle im Reaktionsraum 1 und in dem Staubabscheider 7 bzw. im Beruhigungsraum unterstützen bzw. aufrechterhalten.

Bei der gezeigten Anordnung ist noch von Vorteil, daß die Gas- und Feststoffreinigungsvorrichtung insgesamt einen relativ geringen Druckverlust aufweist. Deshalb ist auch der in den Heizkammern 24 bis 27 des Pyrolyseofens 12 gegenüber dem Umgebungsdruck herrschende Unterdruck gering, so daß zur Verhinderung von Falschluft an die Abdichtung der äußeren Heizkammern 24 und 27 gegenüber dem Rohrrohr 20 geringere Anforderungen zu stellen sind. Darüber hinaus läßt sich mit einem relativ geringen Aufwand, z. B. lediglich durch zusätzliche Installation eines für den Reaktionsraum 1 benötigten Rohres mit innenliegender Schnecke 4 in herkömmlichen Anlagen das gewünschte Ziel erreichen.

Die Misch- und Transporteinrichtung im Reaktionsraum 1 kann auch als Trommel ausgebildet sein, wobei bei einer zylindrischen Trommel diese eine zur Austragsseite hin nach unten geneigte Achse aufweist oder die Innenwand konisch ausgebildet ist.

Auch kann vor dem Staubabscheider 7 eine nicht dargestellte Austragseinrichtung für die beim Abbinden entstandenen verdichteten Stoffe vorgesehen sein.

**Ansprüche**

1. Verfahren zur Abscheidung von gasförmigen und festen Schadstoffen aus Rückständen, die bei thermischen Prozessen, insbesondere der Pyrolyse von Abfallstoffen in Form von Rohgas und Feststoffrückstand, anfallen, dadurch gekennzeichnet, daß die feinen feststoffanteile im Feststoffrückstand zusammen mit dem Rohgas in einem Sichtungsraum aus dem Feststoffrückstand, der als freifallendes Sichtgut aus dem thermischen Prozeß ausgetragen wird, in einen Reaktionsraum abgeleitet werden, in dem durch Zugabe von Additiven die Feststoffanteile und/oder gasförmigen Schadstoffe abgebunden und ausgetragen werden.

2. Verfahren nach Anspruch 1, dadurch gekennzeichnet, daß zum Sichten der feinen Feststoffanteile aus dem Feststoffrückstand das Pyrolysegas verwendet wird.

3. Verfahren nach Anspruch 1 oder 2, dadurch gekennzeichnet, daß das Pyrolysegas getrennt vom Feststoffrückstand aus dem Reaktor abgezogen wird und dann zur Quer- oder Gegenstromrichtung der feinen Feststoffanteile aus dem Sichtgut quer oder entgegengesetzt zum freifallenden Sichtgut geführt wird.

4. Verfahren nach einem der Ansprüche 1 bis 3, dadurch gekennzeichnet, daß das Reingas am Austrag des Reaktionsraumes in einen Beruhigungsraum geleitet wird.

5. Verfahren nach einem der Ansprüche 1 bis 4, dadurch gekennzeichnet, daß die Temperatur im Reaktionsraum über dem Kondensationsstaupunkt von im Rohgas enthaltenen Kohlenwasserstoffen gehalten wird.

6. Verfahren nach einem der Ansprüche 1 bis 5, dadurch gekennzeichnet, daß das Reingas einem oder mehreren Brennern der thermischen Prozeßanlage zur Verbrennung zugeleitet wird.

7. Verfahren nach einem der Ansprüche 1 bis 5, dadurch gekennzeichnet, daß aus dem Gas nach der Trockenreinigung und der Abtrennung der gasförmigen Schadstoffe durch Kondensation Kohlenwasserstoffe, insbesondere Aromaten, entfernt werden.

8. Verfahren nach Anspruch 1, dadurch gekennzeichnet, daß der Rohgasstrom zunächst in gleicher Richtung wie der übrige Rückstand geführt und dann in den Reaktionsraum umgeleitet wird.

9. Vorrichtung zur Durchführung des Verfahrens nach einem der Ansprüche 1 bis 8, dadurch gekennzeichnet, daß der Reaktionsraum (1) mit seiner Eintrittsöffnung (2) mit dem Austragsraum (3) der thermischen Prozeßanlage verbunden ist, der eine Umlenkeinrichtung (8) für das Rohgas aufweist, im Reaktionsraum (1), in den eine Zugabeeinrichtung (5) für Additive mündet, eine Misch- und Transporteinrichtung (4) angeordnet ist und von der Eintrittsseite zur Austragsseite des reaktionsraumes hin ein Druckgefälle herrscht.

10. Vorrichtung nach Ansprucht 9, dadurch gekennzeichnet, daß die Zugabeeinrichtung (5) für die Additive in der Nähe der Eintrittsöffnung (2) des Reaktionsraumes (1) vorgesehen ist und sich die Misch- und Transporteinrichtung (4) von der Zugabestelle bis zum Austragsende (6) des Reaktionsraumes (1) erstreckt.

11. Vorrichtung nach Anspruch 9 oder 10, dadurch gekennzeichnet, daß die Misch- und Transporteinrichtung (4) als Schnecke ausgebildet ist.

12. Vorrichtung nach einem der Ansprüche 9 bis 11, dadurch gekennzeichnet, daß die Misch- und Transporteinrichtung (4) als umlaufende Mischtrommel mit konischer Innenwand oder geneigter Achse ausgebildet ist.

13. Vorrichtung nach einem der Ansprüche 9 bis 12, dadurch gekennzeichnet, daß der untere Teil des Austragsraumes (3) der thermischen Prozeßanlage, durch den der thermische Prozeßrückstand freifallend geleitet wird, nach Art eines Windsichters ausgebildet ist, dessen Austrittsöffnung in den Reaktionsraum (1) einmündet und bei dem der Rohgasstrom in dem Reaktionsraum geleitet wird.

14. Vorrichtung nach einem der Ansprüche 9 bis 13, dadurch gekennzeichnet, daß an der Austragsseite des Reaktionsraumes (1) ein Beruhigungsraum und/oder ein Staubabscheider (7) angeordnet ist, in den der Reaktionsraum (1) tangential einmündet.

15. Vorrichtung nach einem der Ansprüche 9 bis 12, dadurch gekennzeichnet, daß im Bereich des Sichtungsraumes im Austragsraum (3) der thermischen Prozeßanlage eine verstellbare Umlenkeinrichtung (8) angeordnet ist.

16. Vorrichtung nach einem der Ansprüche 9 bis 15, dadurch gekennzeichnet, daß das im Reaktionsraum (1) von der Eintrittseite (2) zur Austragsseite (6) hin herrschende Druckgefälle durch den bei der Gasentstehung in der thermischen Prozeßanlage, insbesondere im Pyrolysereaktor, aufgebauten Druck aufrechterhalten wird.

17. Vorrichtung nach einem der Ansprüche 9 bis 16, dadurch gekennzeichnet, daß für die Aufrechterhaltung des im Reaktionsraum (1) von der Eintrittseite (2) zur Austragseite (6) hin herrschenden Druckgefälles der aufgrund der Injektorwirkung der Verbrennungsluft des bzw. der Brenner der thermischen Prozeßanlage geschaffene Unterdruck verwendet wird.

18. Vorrichtung nach einem der Ansprüche 9 bis 17, dadurch gekennzeichnet, daß zur Aufrechterhaltung des im Reaktionsraum notwendigen Druckgefälles ein Saugzuggebläse (32) auf der Abgasseite des Pyrolysereaktors angeordnet ist.

19. Vorrichtung nach einem der Ansprüche 9 bis 18, dadurch gekennzeichnet, daß die gesamte Leitungsführung vom Austragsraum (3) bis zum Brenner bzw. zu den Brennern thermisch isoliert und/oder beheizt ist.

20. Vorrichtung nach einem der Ansprüche 9 bis 19, dadurch gekennzeichnet, daß zur Vermeidung der Kondensation von Kohlenwasserstoffen eine entsprechende Temperatur in der gesamten Gasleitungsführung vom Austragsraum bis zum Brenner bzw. zu den Brennern durch Beheizung aufrechterhalten ist.

21. Vorrichtung nach einem der Ansprüche 9 bis 20, dadurch gekennzeichnet, daß der Reaktionsraum (1) kanalförmig ausgebildet ist.

**Claims**

1. Process for the separation of gaseous and solid noxious materials from residues resulting from thermal processes, particularly from the pyrolysis of waste materials in form of crude gas and solid residue, characterized in that the fine solid compounds in the solid residue are diverted, together with the crude gas in a sorting space from the solid residue which is discharged of the thermal process as free-falling separated material, into a reaction space where the solid compounds and/or noxious materials are bonded by adding additive agents, and are discharged.

2. Process according to claim 1, characterized in that the pyrolysis gas is used for sorting the fine solid compounds from the solid residue.

3. Process according to claim 1 or 2, characterized in that the pyrolysis gas is issued from the reactor separated from the solid residue, and that it is directed to the cross or countercurrent direction of the fine solid compounds out of the sorted material, accross or opposite to the free-falling sorted material.

4. Process according to one of the claims 1 to 3, characterized in that the pure gas is conducted from the issue of the reaction space into a plenum chamber.

5. Process according to one of the claims 1 to 4, characterized in that the temperature in the reaction space is kept above the condensation stem point of the hydrocarbons contained in the crude gas.

6. Process according to one of the claims 1 to 5, characterized in that the pure gas is supplied to one or several burners of the thermal process plant for combustion.

7. Process according to one of the claims 1 to 5, characterized in that hydrocarbons, particulary aromatics, are removed from the gas by condensation after having it dry-cleaned and separated the gaseous noxious materials.

8. Process according to claim 1, characterized in that the crude gas stream is first conducted into the same direction as the other residue, and is then diverted into the reaction space.

9. Device for realizing the process according to one of the claims 1 to 8, characterized in that the reaction space (1) with its throat (2) is connected with the discharge space (3) of the thermal process plant, the latter one presenting a deflecting installation (8) for the crude gas, that in the reaction space (1) where an installation (5) for adding additive agents is discharging into, there is located a mixing and transporting installation (4), and that there exists a pressure gradient from the entry to the issue of the reaction space.

10. Device according to claim 9, characterized in that the installation (5) for adding additive agents has been planned close to the throat (2) of the reaction space (1), and that the mixing and transporting installation (4) extends from the adding discharge to the issue (6) of the reaction space (1).

11. Device according to claim 9 or 10, characterized in that the mixing and transporting installation (4) is designed as a screw conveyer.

12. Device according to one of the claims 9 to 11, characterized in that the mixing and transporting installation (4) is designed as a rotary mixing drum with a conical inside wall or a sloping axle.

13. Device according to one of the claims 9 to 12, characterized in that the lower part of the discharge space (3) of the thermal process plant where the thermal process residue is passed through in free-fall is designed according to the type of an air-separator the outlet of which discharges into the reaction space (1) and where the crude gas stream is conducted into the reaction space.

14. Device according to one of the claims 9 to 13, characterized in that there is located a plenum chamber and/or a dust separator (7) at the issue of the reaction space (1) discharging tangentially to the dust separator (7).

15. Device according to one of the claims 9 to 12, characterized in that there is located an adjustable deflecting installation (8) in the sector of the sorting space in the discharge space (3) of the thermal process plant.

16. Device according to one of the claims 9 to 15, characterized in that the pressure gradient existing between the throat (2) and the issue (6) of the reaction space (1) is maintained by the pressure created due to the gas deriving from the thermal process plant, particularly from the pyrolysis reactor.

17. Device according to one of the claims 9 to 16, characterized in that the negative pressure created due to the injector effect of the combustion air issued by the burner or burners of the thermal process plant, is used for maintaining the existing pressure gradient from the throat (2) to the issue (6) of the reaction space (1).

18. Device according to one of the claims 9 to 17, characterized in that there is located an unduced-draught blower (32) at the exhaust gas side of the pyrolysis reactor for maintaining the pressure gradient which is necessary in the reaction space.

19. Device according to one of the claims 9 to 18, characterized in that the whole conductor lead from the discharge space (3) up to the burner or to the burners, is thermally insulated and/or heated.

20. Device according to one of the claims 9 to 19, characterized in that a temperature adequate to avoid the condensation of hydrocarbons is maintained in the whole gas conductor lead from the discharge space to the burner or the burners due to heating.

21. Device according to one of the claims 9 to 20, characterized in that the reaction space (1) is designed in form of a channel.

**Revendications**

1. Procédé pour séparer les éléments polluants gazeux ou solides des résidus résultant des procédés thermiques, particulièrement de la pyrolyse de déchets, en forme de gaz brut et de résidu solide, caractérisé en ce que les fines particules solides dans le résidu sont dérivées ensemble avec le gaz brut, de l'espace de triage où le résidu solide qui est évacué du procédé thermique tombe en chute libre comme matière triée, dans un espace de réaction où les substances solides et/ou les éléments polluants gazeux sont combinés chimiquement par l'ajout d'agents additifs et sont évacués.

2. Procédé selon la revendication 1, caractérisé en ce que le gaz de pyrolyse est utilisé pour trier les fines particules solides du résidu solide.

3. Procédé selon la revendication 1 ou 2, caractérisé en ce que le gaz de pyrolyse est évacué du réacteur séparément du résidu solide, et qu'il est amené ensuite, vers la direction transversale ou vers celle à contre-courant des fines particules provenant de la matière triée, au sens transversal ou à contre-sens de la matière triée qui tombe en chute libre.

4. Procédé selon une des revendications 1 à 3, caractérisé en ce que le gaz pur est conduit de la sortie de l'espace de réaction dans un espace de stabilisation.

5. Procédé selon une des revendications 1 à 4, caractérisé en ce que la température de l'espace de réaction est maintenue à un niveau supérieur au point de stagnation faisant condenser les hydrocarbures contenus dans le gaz brut.

6. Procédé selon une des revendications 1 à 5, caractérisé en ce que le gaz pur est amené à un ou à plusieurs brûleurs de l'installation du procédé thermique pour combustion.

7. Procédé selon une des revendications 1 à 5, caractérisé en ce que les hydrocarbures, en particulier les séries aromatiques, sont enlevés du gaz par condensation après la purification à sec de ce gaz et après en avoir séparé les éléments polluants gazeux.

8. Procédé selon la revendication 1, caractérisé en ce que le courant du gaz brut prend d'abord la même direction que l'autre résidu mais qu'il est dérivé ensuite dans l'espace de réaction.

9. Dispositif pour réaliser le procédé selon une des revendications 1 à 8, caractérisé en ce que l'espace de réaction (1) avec son canal d'entrée (2) est connecté à l'espace d'évacuation (3) de l'installation du procédé thermique, ce dernier présentant un mécanisme dériveur (8) pour le gaz brut, que dans l'espace de réaction (1) où débouche un dispositif (5) pour ajouter les agents additifs, est aménagé un mécanisme mélangeur et transporteur (4) et qu'il y a une chute de pression entre le côté d'entrée et la sortie de l'espace de réaction.

10. Dispositif selon la revendication 9, caractérisé en ce que le dispositif (5) pour ajouter les additifs est prévu en proximité du canal d'entrée (2) de l'espace de réaction (1) et que le mécanisme mélangeur et transporteur (4) s'étend du débouché d'ajout jusqu'au point de sortie (6) de l'espace de réaction (1).

11. Dispositif selon la revendication 9 ou 10, caractérisé en ce que le mécanisme mélangeur et transporteur (4) est construit en forme d'un escargot.

12. Dispositif selon une des revendications 9 à 11, caractérisé en ce que le mécanisme mélangeur et transporteur (4) est construit comme un tambour mélangeur rotatif avec une paroi conique ou un axe incliné.

13. Dispositif selon une des revendications 9 à 12, caractérisé en ce que la partie inférieure de l'espace d'évacuation (3) de l'installation du procédé thermique par où le résidu solide du procédé thermique passe en chute libre, est construit selon le modèle d'un aéro-séparateur (cyclone) dont l'orifice de sortie débouche dans l'espace de réaction (1), et que le courant du gaz brut est conduit dans l'espace de réaction.

14. Dispositif selon une des revendications 9 à 13, caractérisé en ce que, du côté d'évacuation de l'espace de réaction (1), il y a un espace de stabilisation et/ou un dépoussiéreur (7) dans lequel l'espace de réaction débouche tangentiellement.

15. Dispositif selon une des revendications 9 à 12, caractérisé en ce qu'il y a une chicane transversale (8) ajustable dans le secteur de l'espace de triage qui est dans l'espace d'évacuation (3) de l'installation du procédé thermique.

16. Dispositif selon une des revendications 9 à 15, caractérisé en ce que la chute de pression existant dans l'espace de réaction (1), entre le côté d'entrée (2) et le côté de sortie (6), est maintenue par la pression qui s'établit suite au dégagement de gaz dans l'installation du procédé thermique, en particulier dans le réacteur de pyrolyse.

17. Dispositif selon une des revendications 9 à 16, caractérisé en ce que, pour maintenir la chute de pression dans l'espace de réaction (1), entre le côté d'entrée (2) et la sortie (6), on utilise le vide qui se produit en raison de l'effet injecteur provoqué par l'air de combustion provenant du ou des brûleurs de l'installation du procédé thermique.

18. Dispositif selon une des revendications 9 à 17, caractérisé en ce que, pour maintenir la chute de pression nécessaire dans l'espace de réaction (1), un ventilateur de tirage par aspiration (32) est disposé du côté où échappe le gaz du réacteur de pyrolyse.

19. Dispositif selon une des revendications 9 à 18, caractérisé en ce que l'ensemble des conduites allant de l'espace d'évacuation (3) au(x) brûleur(s) est thermo-isolé ou/et chauffé.

20. Dispositif selon une des revendications 9 à 19, caractérisé en ce que, pour éviter la condensation des hydrocarbures, une certaine température est maintenue par chauffage dans toutes les conduites de gaz allant de l'espace de réaction jusqu'au(x) brûleur(s).

21. Dispositif selon une des revendications 9 à 20, caractérisé en ce que l'espace de réaction (1) est construit en forme d'un canal.

9